# EUROPEAN PATENT APPLICATION

(11) **EP 2 302 178 A1**
(43) Date of publication of application: **30.03.2011**
(21) Application number: 09742675.3
(22) Date of filing: 23.04.2009
(51) Int. Cl.: F01L 13/00, F01L 1/08, F02D 13/02

(54) **VALVE OPERATING SYSTEM FOR INTERNAL COMBUSTION ENGINES**

(30) Priority: 08.05.2008 JP 2008122616; 03.12.2008 JP 2008308593
(71) Applicant: Toyota Jidosha Kabushiki Kaisha, Toyota-shi, Aichi 471-8571 (JP)
(72) Inventor: EZAKI, Shuichi, Toyota-shi Aichi 471-8571 (JP)
(74) Representative: Albutt, Anthony John
(86) International application number: PCT/JP2009/058099
(87) International publication number: WO 2009/136551

(57) **Abstract**

An object of the present invention is to simplify a valve train system that can change valve operation characteristics of an intake valve(s) and/or an exhaust valve(s) mounted on an internal combustion engine while improving the response in changing valve operation characteristics. To achieve this object, according to the present invention, a valve train system of an internal combustion engine that can change valve operation characteristics of an intake valve and/or an exhaust valve comprises a plurality of changing mechanisms that change valve operation characteristics by connecting/disconnecting a plurality of power transmission members provided between a cam and a valve to/from each other, a switching pin that is provided in each changing mechanism in such a way as to be able to move forward and backward to provide switching between connection and disconnection of the plurality of power transmission members, an actuator that generates power for moving the switching pin forward and backward, and a distribution mechanism that distributes the power generated by one actuator to a plurality of switching pins.

## Description

### TECHNICAL FIELD

The present invention relates to a valve train system that can change valve operation characteristics of an intake valve(s) and/or an exhaust valve(s) mounted on an internal combustion engine.

### BACKGROUND ART

Patent document 1 discloses a mechanism in which a cam piece equipped with a multiple kinds of cams is provided for each cylinder, and the cam used to drive a valve of each cylinder is changed by sliding each cam piece in the axial direction.

Patent document 2 discloses a structure in which a mechanism that changes the cam used to drive a valve by rotating a rocker shaft is used in common by a plurality of cylinders. Patent document 2 also discloses a structure in which a plurality of rocker shafts are rotated utilizing pressure of lubricant oil.

Patent document 3 discloses a structure of a valve train system in which enabling and disabling of a valve is switched by shifting a rocker arm unit in the axial direction, wherein the rocker arm unit is moved in the axial direction by inserting/removing a pin into/out of a rail groove provided on a cam shaft.

Patent document 4 discloses a structure of a valve train system that opens and closes a valve using an electric motor, wherein the system is provided with a mechanism that can provide switching between a state in which power of the electric motor is transmitted to the valve and a state in which power of the electric motor is not transmitted to the valve, the mechanism being driven by a hydraulic or electromagnetic force.

### PRIOR ART DOCUMENTS

### Patent Documents

Patent Document 1: Publication of Japanese Translation of PCT International Application No. 2006-520869
Patent Document 2: Japanese Patent Application Laid-Open No. 02-95710
Patent Document 3: Japanese Patent Application Laid-Open No. 06-212924
Patent Document 4: Japanese Patent Application Laid-Open No. 2005-54732

### DISCLOSURE OF THE INVENTION

### Problem to be Solved by the Invention

An object of the present invention is to simplify a valve train system that can change valve operation characteristics of an intake valve(s) and/or an exhaust valve(s) mounted on an internal combustion engine while improving the response in changing valve operation characteristics.

### Means for Solving the Problem

According to the present invention, to achieve the above object, the mass of a member that is to be shifted by an actuator when the valve operation characteristics of the intake valve(s) and/or the exhaust valve(s) are changed is made smaller, whereby the response upon changing the valve operation characteristics is improved, and the actuator is used in common.

In the multi-cylinder internal combustion engine, a unit for changing the operating angle and the lift of the valve is provided for each valve or each cylinder. Accordingly, an actuator that generates power for the above unit is usually provided for each valve or each cylinder.

In recent years, reduction in the size and weight of internal combustion engines is desired for various reasons. Therefore, it is desirable to reduce the size and weight of valve train systems as much as possible. As may be conceived, one method for achieving this is to use the aforementioned actuator in common for a plurality of units.

However, in cases where the mass of the member that is shifted to change valve operation characteristics, the common use of the actuator may lead to a deterioration in the response. Although, as may be conceived, a deterioration in the response might be prevented by increasing the rating of the actuator, this can cancel the advantages achieved by the common use of the actuator.

In view of the above, according to the present invention, the mass of the member that is shifted to change the valve operation characteristics is reduced, whereby an improvement in the response of the valve train system and a reduction in the size and weight of the valve train system can favorably achieved.

Specifically, according to the present invention, a valve train system of an internal combustion engine that can change valve operation characteristics of an intake valve and/or an exhaust valve provided on an internal combustion engine comprises a plurality of changing mechanisms that change valve operation characteristics by connecting/disconnecting a plurality of power transmission members provided between a cam and a valve to/from each other, a switching pin that is provided in each changing mechanism in such a way as to be able to move forward and backward to provide switching between connection and disconnection of the plurality of power transmission members, an actuator that generates power for moving the switching pin forward and backward, and a distribution mechanism that distributes the power generated by one actuator to a plurality of switching pins.

According to the present invention as above, the mass of the member (or switching pin) that is moved by the actuator when changing the valve operation characteristics is made small. Therefore, a quick change of the valve operation characteristics can be achieved without increasing the rating of the actuator even in the case where a plurality of switching pins are moved forward and backward by one actuator. In consequence, a preferable improvement in the response of the valve train system and a reduction in the size and weight thereof can be achieved.

In the present invention, the plurality of power transmission members provided in the changing mechanism may be, for example, a first swing member that is caused to swing by a cam and a second swing member that swings with the operation of the valve. When this is the case, the switching pin may be supported by one of the first swing member and the second swing member in such a way as to be able to move forward and backward and inserted/retracted into/out of an engagement bore provided in the other of the first swing member and the second swing member.

In this construction, with the insertion of the switching pin into the engagement bore, the first swing member and the second swing member are connected with each other. Then the actuating force of the cam is transmitted to the valve via the first swing member and the second swing member.

On the other hand, with removal of the switching pin from the engagement bore, the first swing member and the second swing member are disconnected from each other. Then, the actuating force of the cam is transmitted to the first swing member but not transmitted from the first swing member to the second swing member. Consequently, the valve opening/closing operation is disabled.

In this construction, if the gap between the first swing member and the second swing member is made as small as possible, the amount of shift of the switching pin in switching between connection and disconnection of the first swing member and the second swing member is made small. In consequence, the switching between connection and disconnection of the first swing member and the second swing member can be achieved quickly, and the rating of the actuator can be made smaller.

A cam (or sub cam) different from the cam (which will be hereinafter referred to as the "main cam") that is in contact with the first swing member may be in contact with the second swing member. If this is the case, the valve is opened/closed in accordance with the cam profile of the sub cam, while the first swing member and the second swing member are being disconnected. In consequence, the valve operation characteristics during the time in which the first swing member and the second swing member are being connected and the valve operation characteristics during the time in which the first swing member and the second swing member are being disconnected can be made different from each other.

In this regard, it is necessary for the sub cam to have a cam profile that provides an operating angle and a lift that are smaller than those of the main cam. This is because if the operating angle and the lift (or the height of the cam nose) of the sub cam are larger than those of the main cam, it becomes impossible to operate the valve in accordance with the cam profile of the main cam during the time in which the first swing member and the second swing member are being connected.

In the present invention, the distribution mechanism may comprise a shift member that can shift with the forward and backward motion of the plurality of switching pins. When this is the case, the actuator may be, for example, an actuator that comprises a biasing member that biases the shift member in the direction of forward motion of the switching pins and a drive unit that causes the shift member to shift in the direction of backward motion of the switching pins.

With this construction, a simplification of the mechanism that causes the shift member to shift in the direction of forward motion of the switching pins is achieved, and a further reduction in the size and weight of the valve train system can be achieved.

The aforementioned drive unit may cause the shift member to shift utilizing a torque of the cam. If this is the case, it is not necessary for the actuator to generate a power for moving the switching pins forward/backward. Therefore, the rating of the actuator can further be made smaller, and the switching pins can be moved forward/backward more quickly.

The structure that causes the shift member to shift utilizing a torque of the cam may be, for example, a helical groove provided on an outer circumferential surface of a rotary member that rotates with the cam, and an insert pin that is attached on the shift member and can be inserted/removed into/out of the helical groove. When this is the case, it is necessary for the drive unit to insert/remove the insert pin into/out of the helical groove. However, the power required to insert/remove the insert pin is very low. Therefore, the rating of the actuator can be made as low as possible, and quick switching of the valve operation characteristics can be achieved.

The shift member may comprise a shaft member that is in contact with the switching pins, can move forward and backward in the same direction as the switching pins and can rotate in a circumferential direction, and a pivoting member that is fixed to the shaft member and can pivot about the shaft member serving as a pivot shaft. When this is the case, the insert pin may be mounted on the pivoting member. Then, the drive unit can insert the insert pin into the helical groove by pressing the pivoting member.

The insert pin may be provided between a portion of the pivoting member that is in contact with the drive unit and a portion of the pivoting member that is connected to the shaft member. If this is the case, the point of application (i.e. the portion on which the insert pin is provided) is located between the power point (i.e. the portion that is in contact with the drive unit) and the pivot support of the pivoting member (i.e. the portion connected to the shaft member). Therefore, a reactive force exerted on the pivoting member by the helical groove can be received by two portions, namely the aforementioned power point and the pivot support. Consequently, a deformation of the pivoting member by the afore-described reactive force can be made small. Furthermore, since the power point and the point of application are located on the opposite sides, the degree of freedom in arranging the drive unit can be increased.

A volume portion may be provided on a surface of the aforementioned pivoting member that faces in the direction in which the insert pin is removed from the helical groove and in the direction in which the weight of the shift member acts. With this construction, the weight of the volume portion acts in the direction in which the insert pin is removed from the helical groove. Consequently, it is possible to remove the insert pin quickly out of the helical groove. The volume portion may be either located adjacent to or continuous with the portion that is in contact with the drive unit, as long as the above-described condition is met. Since this leads to an increase in the area of the portion with which the drive unit can be in contact, the pivoting of the pivoting member by the drive unit is likely to be ensured, even if an age deterioration occurs, or an assembly error and/or initial tolerance exist.

The valve train system according to the present invention may further be provided with a restraining mechanism that mechanically restrains a shift of the aforementioned shift member in the forward direction when the shift member has shifted to reach its backside extremity.

When the aforementioned shift member is located at the backside extremity, the biasing member exerts a force that pushes back the shift member in the forward direction. In view of this, to maintain the disconnection of the first swing member and the second swing member, it is necessary to keep the shift member at the backside extremity against the biasing force of the biasing member.

A countermeasure for this that uses the power of the actuator may be conceived of. However, this can lead to an increase in the energy consumption in the actuator. In view of this, the restraining mechanism that mechanically restrains a shift of the shift member may be adopted, whereby the energy consumption in the actuator can be reduced.

The valve train system according to the present invention may further comprise a control means for controlling the actuator in such a way that the first swing member and the second swing member are disconnected at a time when a fuel cut operation of the internal combustion engine is started.

If the intake valve and/or the exhaust valve operate to open/close during the fuel cut operation of the internal combustion engine, fresh air (i.e. air containing abundant oxygen) will pass through the combustion chamber and an exhaust gas purification apparatus. In consequence, there is a possibility that a noble metal catalyst supported on the exhaust gas purification apparatus is oxidized, and the purifying capability of the exhaust gas purification apparatus is deteriorated or lowered.

If the actuator is controlled so as to disconnect the first swing member and the second swing member at the time of start of the fuel cut operation, the opening/closing operation of the intake valve and/or the exhaust valve can be disabled immediately. In consequence, the entrance of fresh air into the exhaust gas purification apparatus can be prevented.

Even in the case where the valve train system according to the present invention is provided with a sub cam, the quantity of air passing through the combustion chamber and the exhaust gas purification apparatus can be decreased as quickly as possible, because the operating angle and the lift provided by the cam profile of the sub cam are smaller than those of the main cam. In consequence, a deterioration or decrease in the purifying capability of the exhaust gas purification apparatus can be prevented from occurring.

### Advantageous Effect of the Invention

According to the present invention, a simplification of a valve train system that can change valve operation characteristics of an intake valve(s) and/or an exhaust valve(s) mounted on an internal combustion engine can be achieved while improving the response in changing valve operation characteristics.

### BRIEF DESCRIPTION OF THE DRAWINGS

Fig. 1 is a diagram showing the general configuration of an internal combustion engine according to a first embodiment.
Fig. 2 is a diagram showing the general construction of a mechanism for opening/closing intake valves.
Fig. 3 is a plan view of a first changing group.
Fig. 4 is a side view of a first roller rocker arm.
Fig. 5 is a side view of a second roller rocker arm.
Fig. 6 is a horizontal cross sectional view of a first changing mechanism.
Fig. 7 is a diagram showing the structures of a first support shaft and a first pin.
Fig. 8 is a diagram showing the structures of a second support shaft and a second pin.
Fig. 9 is a diagram illustrating the operation of a first switching mechanism.
Fig. 10 is a horizontal cross sectional view of a second changing mechanism.
Fig. 11 is a diagram illustrating the operation of a second switching mechanism.
Fig. 12 is a diagram showing a first exemplary structure of a first actuator in the first embodiment.
Fig. 13 is a diagram showing a second exemplary structure of the first actuator in the first embodiment.
Fig. 14 is a diagram showing a third exemplary structure of the first actuator in the first embodiment.
Fig. 15 is a chart showing the operation timing of the first actuator and the second actuator.
Fig. 16 is a vertical cross sectional view showing the structure of a first actuator in a second embodiment.
Fig. 17 is a plan view showing the structure of the first actuator in the second embodiment.
Fig. 18 is a diagram showing the structure of an intake cam shaft in the second embodiment.
Fig. 19 is a diagram showing an exemplary arrangement of a removing spring in the second embodiment.
Fig. 20 is a first diagram illustrating the operation of the first actuator in the second embodiment.
Fig. 21 is a second diagram illustrating the operation of the first actuator in the second embodiment.
Fig. 22 is a third diagram illustrating the operation of the first actuator in the second embodiment.
Fig. 23 is a first diagram showing a preferable arrangement of an insert pin in the second embodiment.
Fig. 24 is a diagram showing an exemplary arrangement of the first actuator in the second embodiment.
Fig. 25 is a second diagram showing a preferable arrangement of the insert pin in the second embodiment.
Fig. 26 is a diagram showing another exemplary structure of the first actuator in the second embodiment.

### THE BEST MODE FOR CARRYING OUT THE INVENTION

In the following, specific embodiments of the present invention will be described with reference to the drawings. The dimensions, materials, shapes and relative arrangements etc. of the components that will be described in connection with the embodiments are not intended to limit the technical scope of the present invention only to them, unless particularly stated.

### (Embodiment 1)

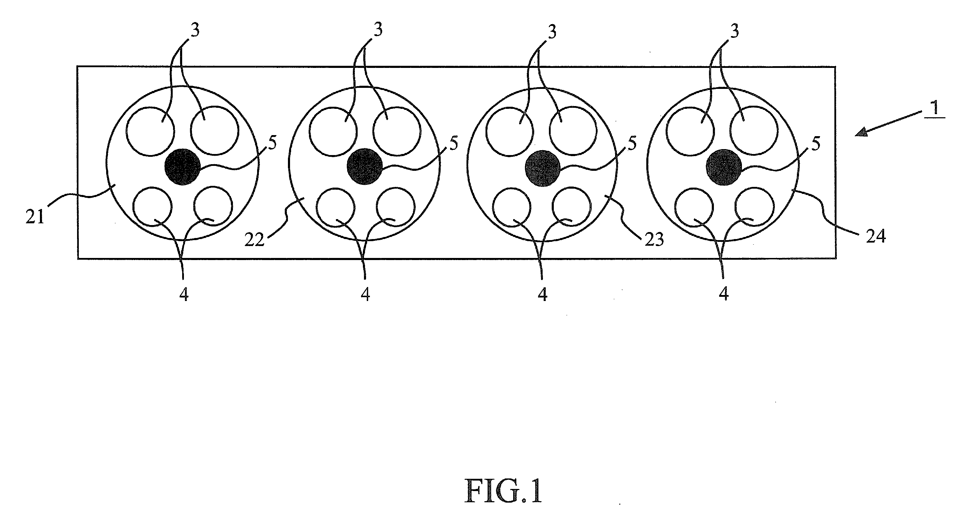

A first embodiment of the present invention will firstly be described with reference to Figs. 1 to 15. Fig. 1 is a diagram showing the general configuration of an internal combustion engine to which the present invention is applied.

The internal combustion engine 1 shown in Fig. 1 is a four-stroke-cycle, spark-ignition internal combustion engine (gasoline engine). The internal combustion engine 1 has four cylinders 21, 22, 23, 24. Two intake valves 3 and two exhaust valves 4 are provided for each cylinder 21, 22, 23, 24. Furthermore, an ignition plug 5 for generating a spark in the cylinder is provided for each cylinder 21, 22, 23, 24.

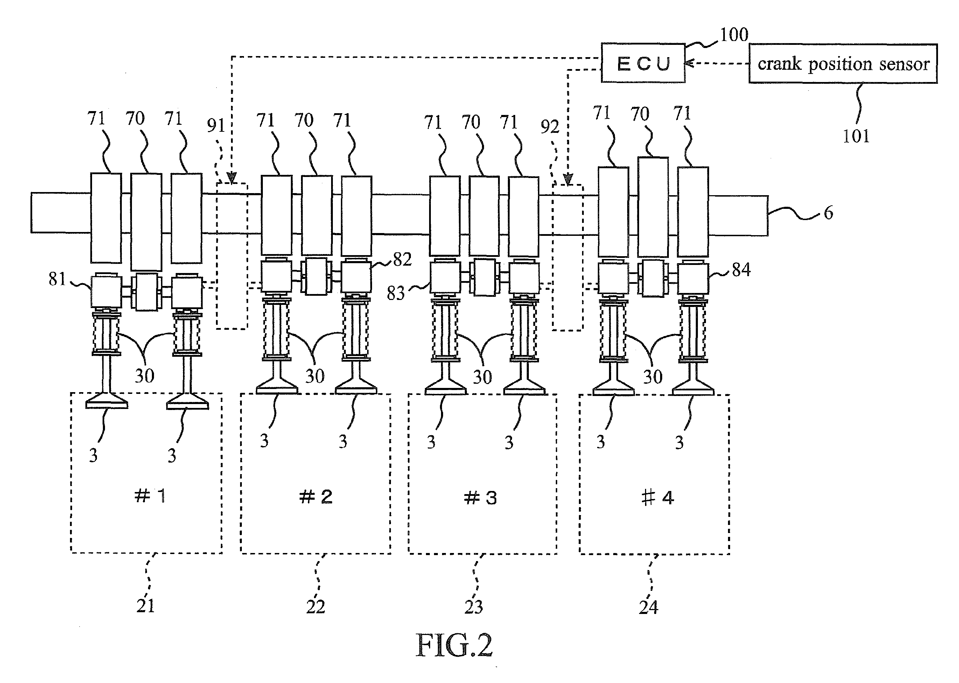

As shown in Fig. 2, each intake valve 3 is opened and closed utilizing the driving forces of cams 70, 71 mounted on an intake cam shaft 6 and the biasing force of a valve spring 50. The intake cam shaft 6 is linked with the engine output shaft (or crankshaft), which is not shown in the drawings, by a timing chain or timing belt so as to be rotated at half the speed of the crankshaft.

For each cylinder, one main cam 70 and two sub cams 71 are provided on the intake cam shaft 6. The main cam 70 is disposed between the two sub cams 71. The cam profile of the main cam 70 is designed in such a way as to provide a larger operating angle and a larger lift (or cam nose height) than the sub cams 71.

In this embodiment, the cam profile of the sub cam 71 is designed in such a way as to make the lift of the intake valve 3 equal to zero (namely, the height of the cam nose is zero). In other words, the sub cam 71 is a cam that has only the base circle portion (i.e. zero lift cam) .

A changing mechanism 81, 82, 83, 84 is interposed between the cams 70, 71 of each cylinder 21, 22, 23, 24 and the intake valves 3. Thus, the actuating forces of the cams 70, 71 are transmitted to the two intake valves 3 through the changing mechanism 81, 82, 83, 84.

The changing mechanism 81, 82, 83, 84 is a mechanism that changes valve operation characteristics of the intake valves 3 by providing switching between a state in which the actuating force of the main cam 70 is transmitted to the intake valves 3 and a state in which the actuating force of the sub cams 71 is transmitted to the intake valves 3.

Since the sub cams 71 in this embodiment are zero lift cams, the state in which the actuating force of the sub cams 71 is transmitted to the intake valves 3 is a state in which the intake valves 3 are not opened/closed (i.e. valve inactive state).

The changing mechanism (which will be hereinafter referred to as the "first changing mechanism") 82 for the number one cylinder (#1) 21 and the changing mechanism (which will be hereinafter referred to as the "second changing mechanism") 82 for the number two cylinder (#2) 22 are driven by one actuator (which will be hereinafter referred to as the "first actuator") 91. In the following description, the first changing mechanism 81, the second changing mechanism 82, and the first actuator 91 will be collectively referred to as the first changing group.

Similarly, the changing mechanism (which will be hereinafter referred to as the "third changing mechanism") 83 for the number three cylinder (#3) 23 and the changing mechanism (which will be hereinafter referred to as the "fourth changing mechanism") 84 for the number four cylinder (#4) 24 are driven by one actuator (which will be hereinafter referred to as the "second actuator") 92. In the following description, the third changing mechanism 83, the fourth changing mechanism 84, and the second actuator 92 will be collectively referred to as the second changing group.

In the following, the construction of the first changing group and the second changing group will be described. Since the first changing group and the second changing group have the same construction, only the construction of the first group will be described here.

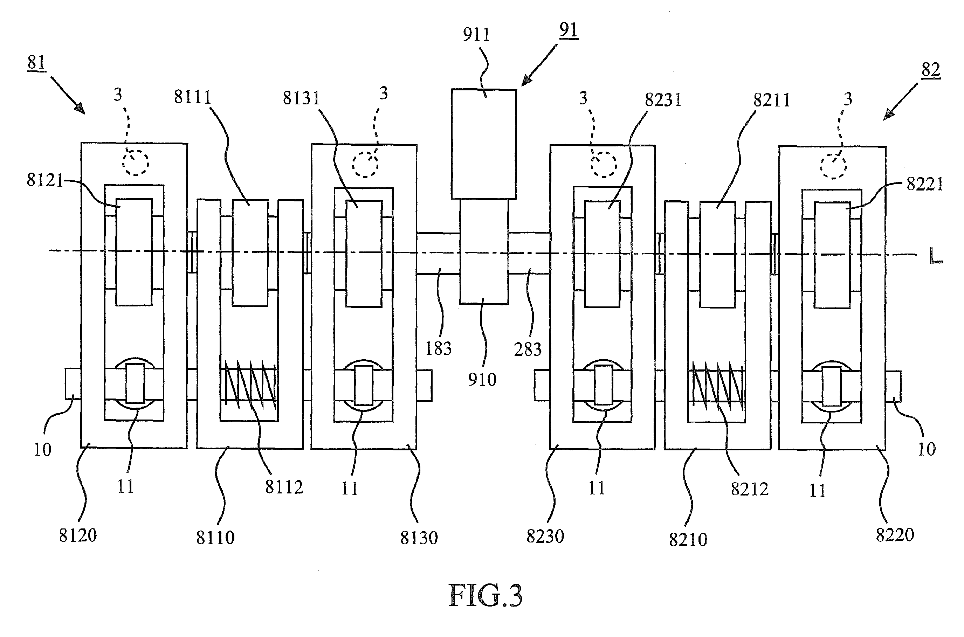

Fig. 3 is a plan view of the first changing group. In Fig. 3, the first changing mechanism 81 includes a rocker shaft 10 arranged in parallel to the intake cam shaft 6. The rocker shaft 10 is supported on a cylinder head of the internal combustion engine 1 via a lash adjusters 11.

One first roller rocker arm 8110 and two second roller rocker arms 8120, 8130 are swingably mounted on the rocker shaft 10. The first roller rocker arm 8110 is disposed between the two second roller rocker arms 8120, 8130. In the case of this embodiment, the length of the first roller rocker arm 8110 is shorter than the length of the second roller rocker arms 8120, 8130.

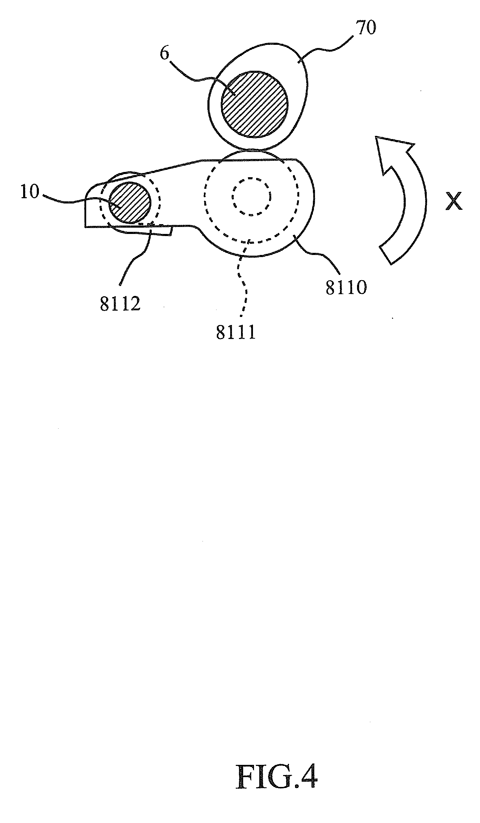

A first roller 8111 is rotatably supported on the tip portion of the first roller rocker arm 8110. The first roller rocker arm 8110 is biased in the direction indicated by arrow X in Fig. 4 by a coil spring 8112 attached on the rocker shaft 10. In other words, the coil spring 8112 biases the first roller rocker arm 8110 so that the first roller 8111 is always kept in contact with the main cam 70.

The first roller rocker arm 8110 having the above construction is swung about the rocker shaft 10 by the cooperation of the actuating force of the main cam 70 and the biasing force of the coil spring 8112. The first roller rocker arm 8110 corresponds to the first swing member according to the present invention.

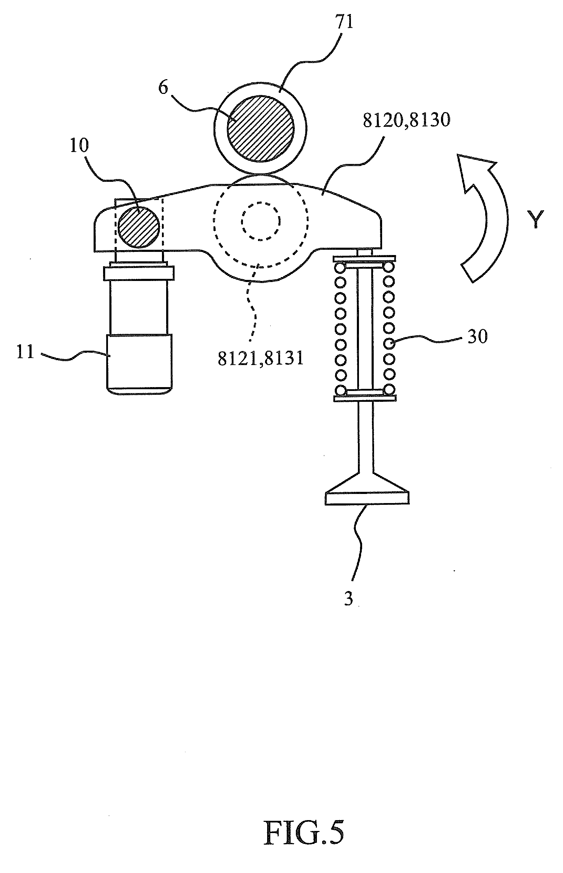

On the other hand, as shown in Fig. 5, the base end of the intake valve 3 (or, specifically, the base end of the valve stem) is in contact with the tip portion of each of the second roller rocker arms 8120, 8130. Second rollers 8121, 8131 are rotatably supported on the portions of the respective second roller rocker arms 8120, 8130 that are closer to the rocker shaft 10 than the portions with which the intake valves 3 are in contact are. The outer diameter of the second rollers 8121, 8131 is the same as the outer diameter of the first roller 8111.

The positions of the second rollers 8121, 8131 are determined in such a way that the central axes of the second rollers 8121, 8131 and the central axis of the first roller 8111 are aligned on the same line (i.e. virtual line L in Fig. 3) when the first roller 8111 is in contact with the base circle portion of the main cam 70 (see Fig. 4) and the second rollers 8121, 8131 are in contact with the base circle portions of the sub cams 71 (see Fig. 5).

The second roller rocker arms 8120, 8130 are biased in the direction indicated by arrow Y in Fig. 5 by valve springs 30. Therefore, the second rollers 8121, 8131 are pressed against the sub cams 71 by the valve springs 30 while the sub cams 71 are lifting the intake valves 3. However, this does not apply to the sub cams 71 of this embodiment, because the sub cams 71 in this embodiment are zero lift cams.

On the other hand, while the sub cams 71 are not lifting the intake valves 3, the second roller rocker arms 8120, 8130 are pressed against the sub cams 71 by the lash adjusters 11.

The second roller rocker arms 8120, 8130 having the above construction correspond to the second swing member according to the present invention.

Now, a mechanism (which will be hereinafter referred to as the "first switching mechanism") that provides switching between connection and disconnection of the first roller rocker arm 8110 and the second roller rocker arms 8120, 8130 will be described.

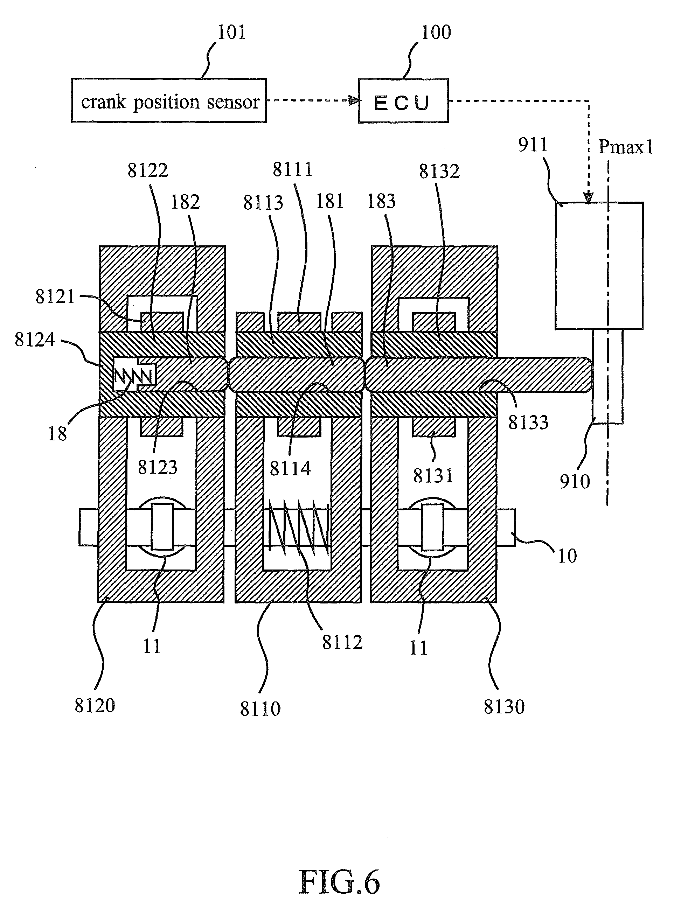

Fig. 6 is a horizontal cross sectional view of the first changing mechanism 81. It is assumed that the second changing mechanism 82 is located on the right side in Fig. 6.

In Fig. 6, the shaft 8113 (which will be hereinafter referred to as the "first support shaft") that rotatably supports the first roller 8111 is provided with a first pin bore 8114 extending along the axial direction. Both ends of the first pin bore 8114 open on both sides of the first roller rocker arm 8110.

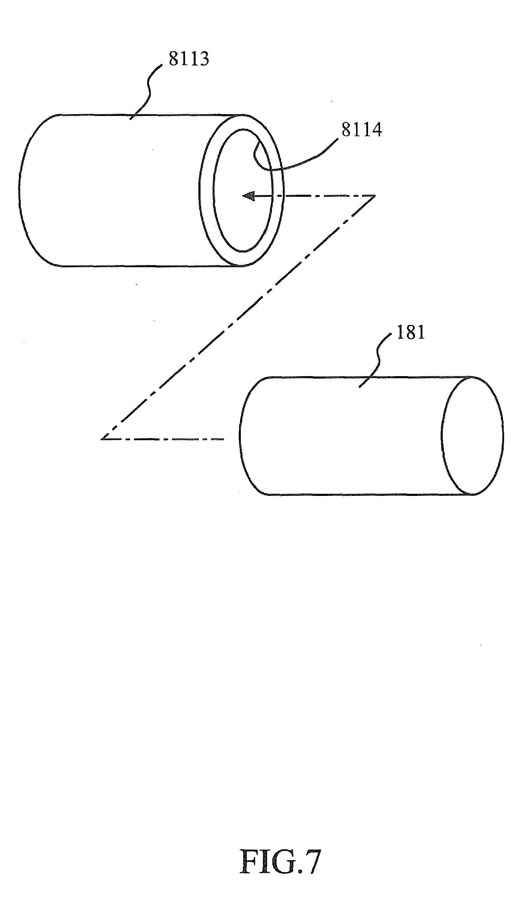

As shown in Fig. 7, a first pin 181 having a cylindrical shape is slidably inserted in the first pin bore 8114. The outer diameter of the first pin 181 is substantially equal to the inner diameter of the first pin bore 8114. The length of the first pin 181 along the axial direction is substantially equal to that of the first pin 8114.

Returning to Fig. 6, the shafts 8122, 8132 (which will be hereinafter referred to as the "second support shafts") that rotatably support the second rollers 8121, 8131 are provided with second pin bores 8123, 8133 extending along the axial direction. The inner diameter of the second pin bores 8123, 8133 is substantially equal to the inner diameter of the first pin bore 8114.

One second pin bore 8123 among the two second pin bores 8123, 8133 (that is, the second pin bore located opposite to the second changing mechanism 82 with respect to the first roller rocker arm 8110) is configured to open at the end that faces the first roller rocker arm 8110 and to be closed at the end 8124 facing away from the first roller rocker arm 8110. (The end that is closed will be hereinafter referred to as the "closed end".)

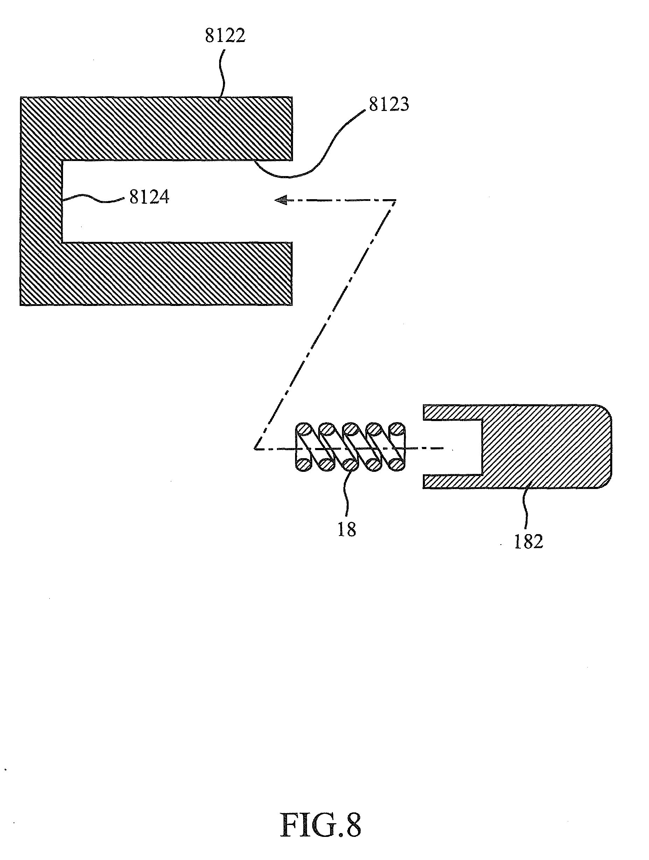

As shown in Fig. 8, a second pin 182 having a cylindrical shape is slidably inserted in the second pin bore 8123. The outer diameter of the second pin 182 is substantially equal to the inner diameter of the second pin bore 8123. The length of the second pin 182 along the axial direction is shorter than that of the second pin bore 8123.

In the second pin bore 8123, a return spring 18 is interposed between the base end (i.e. the end facing the closed end 8124) of the second pin 182 and the closed end 8124. The return spring 18 is a member that biases the second pin 182 toward the first roller rocker arm 8110 and corresponds to the biasing member according to the present invention.

Returning to Fig. 6, both ends of the other second pin bore 8133 among the two second pin bores 8123, 8133 (that is, the second pin bore located on the second changing mechanism 82 side with respect to the first roller rocker arm 8110) open on both sides of the second roller rocker arm 8130, as with the first pin bore 8114.

A second pin 183 having a cylindrical shape is slidably inserted in the second pin bore 8133. The outer diameter of the second pin 183 is substantially equal to the inner diameter of the second pin bore 8133. The length of the second pin 183 along the axial direction is longer than that of the second pin bore 8133.

The center axes of the pin bores 8114, 8123, 8133 need not coincide with the center axes of the respective support shafts 8113, 8122, 8132. However, the relative positions of the three pin bores 8114, 8123, 8133 should satisfy the following condition.

That is, the relative positions of the three pin bores 8114, 8123, 8133 are determined in such a way that the central axes of the three pin bores 8114, 8123, 8133 are aligned on the same line when the first roller 8111 is in contact with the base circle portion of the main cam 70 (see Fig. 4) and the second rollers 8121, 8131 are in contact with the base circle portions of the sub cams 71 (see Fig. 5).

In the first switching mechanism having the above construction, the second pin 182 is always biased toward the first roller rocker arm 8110 by the return spring 18. Consequently, the tip end of the second pin 182 is pressed against the base end of the first pin 181. Accordingly, the tip end of the first pin 181 is pressed against the base end of the second pin 183. In consequence, the tip end of the second pin 183 is always in contact with a shift member 910 of the first actuator 91.

The shift member 910 mentioned above is a member that can shift or move forward and backward along the axial direction of the support shafts 8113, 8122, 8132 (namely, the axial direction of the pins 181, 182, 183). This member is driven or shifted by a drive unit 911.

The drive unit 911 mentioned above is an apparatus that causes the shift member 910 to shift using a hydraulic pressure or electrical power as the power source. The drive unit 911 is electrically controlled by an ECU 100. The ECU 100 is an electronic control unit for controlling the operation state of the internal combustion engine 1. The ECU 100 controls the drive unit 911 based on an output signal of a crank position sensor 101 etc. The crank position sensor 101 is a sensor that senses the rotational angle of the output shaft (or crankshaft) of the internal combustion engine 1.

The dimensions and relative positions of the shift member 910, return spring 18, first pin 181, and second pins 182, 183 should be determined in such a way as to satisfy the following two conditions.

(1) When the shift member 910 is located at the extremity Pmax1 on the second changing mechanism 82 side, in other words, when the return spring 18 is extended to a predetermined maximum length, the tip end of the second pin 182 and the base end of the first pin 181 are located in a gap between the second roller rocker arm 8120 and the first roller rocker arm 8110, and the tip end of the first pin 181 and the base end of the second pin 183 are located in the gap between the first roller rocker arm 8110 and the second roller rocker arm 8130 (see Fig. 6).

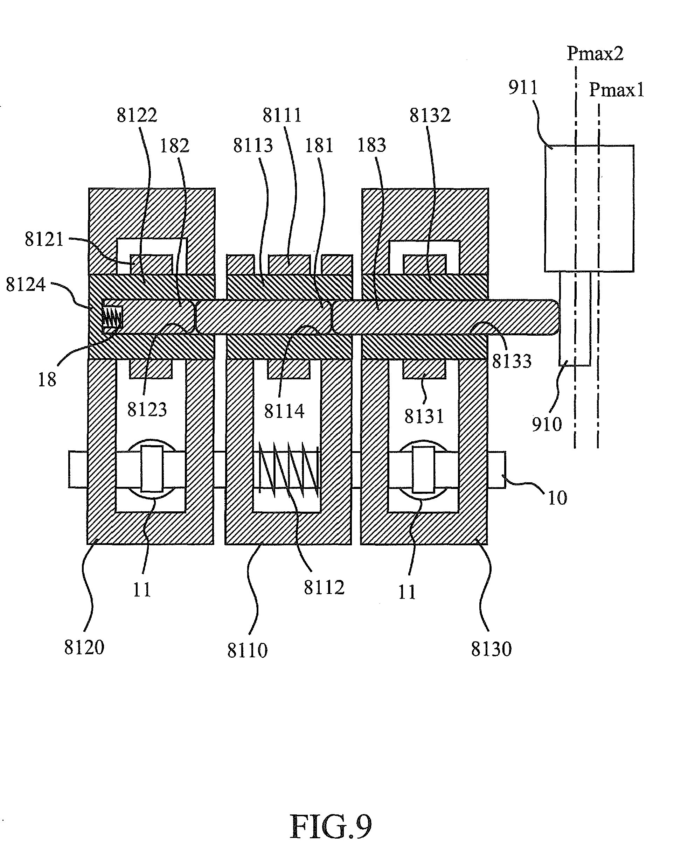

(2) When the shift member 910 is located at the extremity Pmax2 on the first changing mechanism 81 side, in other words, when the return spring 18 is retracted to a predetermined minimum length, the tip end of the second pin 182 and the base end of the first pin 181 are located in the second pin bore 8123, and the tip end of the first pin 181 and the base end of the second pin 183 are located in the first pin bore 8114 (see Fig. 9).

If the relative positions and dimensions of the shift member 910, return spring 18, first pin 181, and second pins 182, 183 are determined according to the above conditions (1) and (2), a state in which the first roller rocker arm 8110 and the second roller rocker arms 8120, 8130 are being disconnected from each other is achieved when the shift member 910 is located at the extremity Pmax1.

In this state, the first roller rocker arm 8110 will receive the actuating force of the main cam 70 to swing, and the second roller rocker arms 8120, 8130 will receive the actuating forces of the sub cams 71 to swing. In the case of this embodiment, since the sub cams 71 are zero lift cams, the second roller rocker arms 8120, 8130 will not swing. Consequently, a valve inactive state in which the operation of opening/closing the intake valves 3 is performed is achieved.

As only the first roller rocker arm 8110 swings as described above, the central axis of the first pin 181 and the central axes of the second pins 182, 183 become offset. At that time, it is necessary that a portion of the end face of the first pin 181 and a portion of the end face of each of the second pins 182, 183 are in contact with each other. Therefore, the shape and dimension of the end faces of the first pin 181 and the second pins 182, 183 should be determined in such a way as to meet this condition.

However, an increase in the contact area of the end faces of the first pin 181 and the end faces of the second pins 182, 183 leads to an increase in the sliding resistance between them. In view of this, it is preferred that the shape and dimension of the end faces of the first pin 181 and the second pins 182, 183 be determined in such a way as to provide minimum contact areas while meeting the above condition.

When the shift member 910 is shifted to the extremity Pmax2, the second roller rocker arm 8120 and the first roller rocker arm 8110 are connected by the first pin 181, and the first roller rocker arm 8110 and the second roller rocker arm 8130 are connected by the second pin 183. In other words, when the shift member 910 is located at the extremity Pmax2, a state in which the first roller rocker arm 8110 and the second roller rocker arms 8120, 8130 are being connected with each other is achieved.

When the first roller rocker arm 8110 and the second roller rocker arms 8120, 8130 are connected to each other, as the first roller rocker arm 8110 receives the actuating force of the main cam 70 to swing, the second roller rocker arms 8120, 8130 also swing with the first roller rocker arm 8110. In consequence, the intake valves 3 are operated to open/close in accordance with the cam profile of the main cam 70.

Therefore, the active state and the inactive state of the intake valves 3 can be switched by shifting the pins 181, 182, and 183 in the axial direction by the first actuator 91. The pins 181, 182, and 183 in this process correspond to the switching pins according to the present invention.

Returning to Fig. 3, the construction of the second changing mechanism 82 will be described. The second changing mechanism includes, as with the above-described first changing mechanism, one first roller rocker arm 8210 and two second roller rocker arms 8220, 8230 that are swingably mounted on the rocker shaft 10.

The first roller rocker arm 8210 corresponds to the first swing member according to the present invention. A first roller 8211 is rotatably supported on the tip portion of the first roller rocker arm 8210. The first roller 8211 is pressed against the main cam 70 by a biasing force of a coil spring 8212 attached on the rocker shaft 10.

The second roller rocker arms 8220, 8230 correspond to the second swing member according to the present invention. The base end of the intake valve 3 is in contact with the tip portion of each of the second roller rocker arms 8220, 8230. Second rollers 8221, 8231 are rotatably supported on the portions of the respective second roller rocker arms 8220, 8230 that are closer to the rocker shaft 10 than the portions with which the intake valves 3 are in contact are. The second rollers 8221, 8231 are pressed against the sub cams 71 by valve springs 30 and/or lash adjuster 11.

A mechanism (which will be hereinafter referred to as the "second switching mechanism") that provides switching between connection and disconnection of the first roller rocker arm 8210 and the second roller rocker arms 8220, 8230 has a construction that is substantially symmetric with the first switching mechanism.

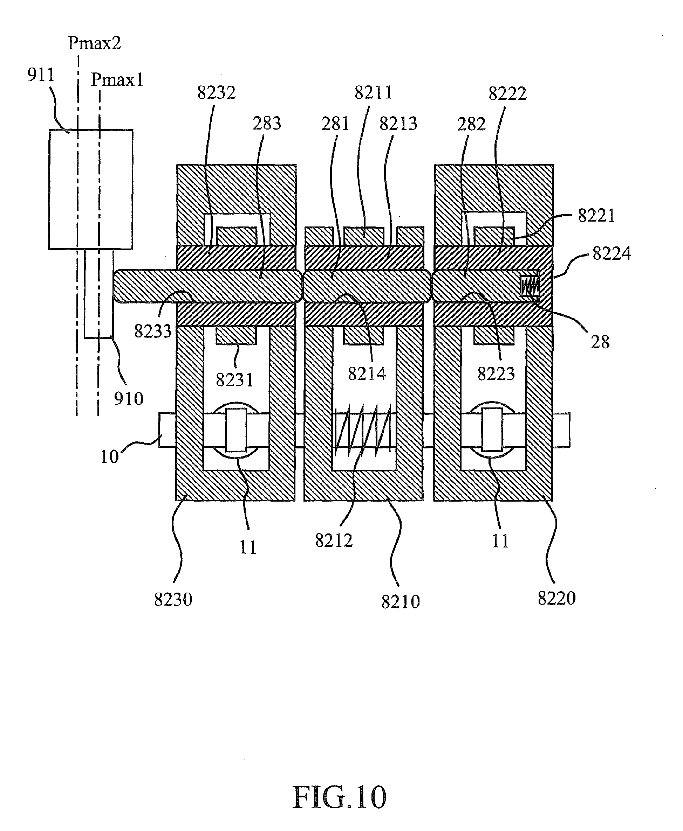

Fig. 10 is a cross sectional view of the second changing mechanism 82. It is assumed that the first changing mechanism 81 is located on the left side in Fig. 10.

In Fig. 10, the shaft (first support shaft) 8213 that rotatably supports the first roller 8211 is provided with a first pin bore 8214 extending along the axial direction. Both ends of the first pin bore 8214 open on both sides of the first roller rocker arm 8210.

A first pin 281 having a cylindrical shape is slidably inserted in the first pin bore 8214. The outer diameter of the first pin 281 is substantially equal to the inner diameter of the first pin bore 8214. The length of the first pin 281 along the axial direction is substantially equal to that of the first pin bore 8214.

The shafts (second support shafts) 8222, 8232 that rotatably support the second rollers 8221, 8231 are provided with second pin bores 8223, 8233 extending along the axial direction. The inner diameter of the second pin bores 8223, 8233 is substantially equal to the inner diameter of the first pin bore 8214.

One second pin bore 8223 among the two second pin bores 8223, 8233 (that is, the second pin bore located opposite to the first changing mechanism 81 with respect to the first roller rocker arm 8210) is configured to open at the end that faces the first roller rocker arm 8210 and to be closed at the end 8224 facing away from the first roller rocker arm 8210. (The end that is closed will be hereinafter referred to as the "closed end".)

A second pin 282 having a cylindrical shape is slidably inserted in the second pin bore 8223. The outer diameter of the second pin 282 is substantially equal to the inner diameter of the second pin bore 8223. The length of the second pin 282 along the axial direction is substantially equal to that of the second pin bore 8223.

In the second pin bore 8223, a return spring 28 is interposed between the base end of the second pin 282 (i.e. the end facing the closed end 8224) and the closed end 8224. The return spring 28 is a member that biases the second pin 282 toward the first roller rocker arm 8210 and corresponds to the biasing member according to the present invention.

Both ends of the other second pin bore 8233 among the two second pin bores 8223, 8233 (that is, the second pin bore located on the first changing mechanism 81 side with respect to the first roller rocker arm 8210) open on both sides of the second roller rocker arm 8230, as with the first pin bore 8214.

A second pin 283 having a cylindrical shape is slidably inserted in the second pin bore 8233. The outer diameter of the second pin 283 is substantially equal to the inner diameter of the second pin bore 8233. The length of the second pin 283 along the axial direction is longer than that of the second pin bore 8233.

The relative positions of the three pin bores 8214, 8223, 8233 are determined in such a way as to meet the conditions same as those for the pin bores 8114, 8123, 8133 in the above-described first switching mechanism.

In the second switching mechanism having the above construction, the second pin 282 is always biased toward the first roller rocker arm 8210 by the return spring 28. Consequently, the tip end of the second pin 282 is pressed against the base end of the first pin 281. Accordingly, the tip end of the first pin 281 is pressed against the base end of the second pin 283. In consequence, the tip end of the second pin 283 is always in contact with a shift member 910 of the first actuator 91.

The relative positions and dimensions of the shift member 910, return spring 28, first pin 281, and second pins 282, 283 should be determined in such a way as to meet the following two conditions.

(3) When the shift member 910 is located at the extremity Pmax1, in other words, when the return spring 28 is retracted to a predetermined minimum length, the tip end of the second pin 282 and the base end of the first pin 281 are located in a gap between the second roller rocker arm 8220 and the first roller rocker arm 8210, and the tip end of the first pin 281 and the base end of the second pin 283 are located in the gap between the first roller rocker arm 8210 and the second roller rocker arm 8230 (see Fig. 10).

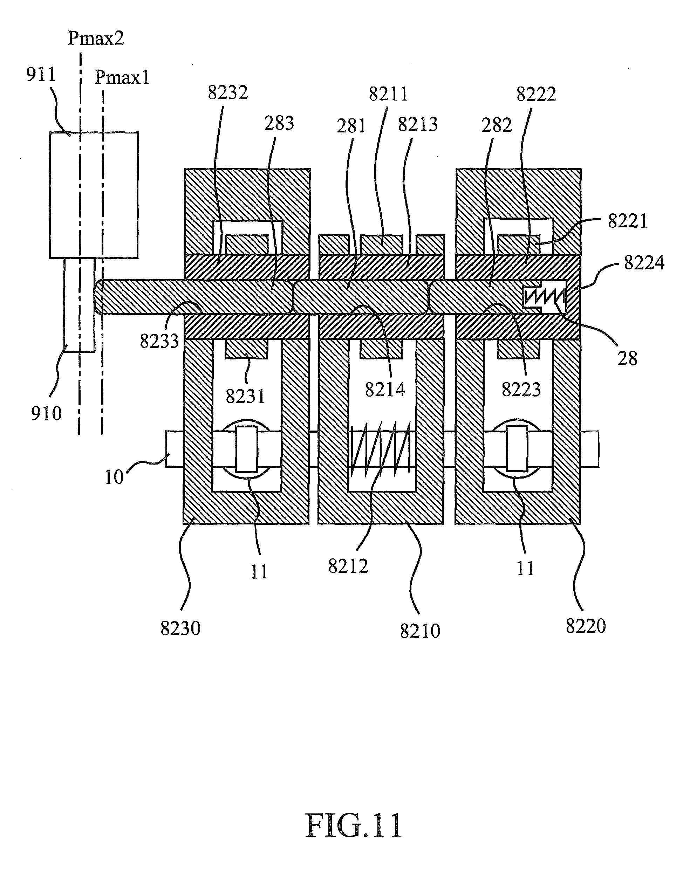

(4) When the shift member 910 is located at the extremity Pmax2, in other words, when the return spring 28 is extended to a predetermined maximum length, the tip end of the second pin 282 and the base end of the first pin 281 are located in the first pin bore 8214, and the tip end of the first pin 281 and the base end of the second pin 283 are located in the second pin bore 8233 (see Fig. 11).

If the relative positions and dimensions of the shift member 910, return spring 28, first pin 281, and second pins 282, 283 are determined is such a way as to meet the above conditions (3) and (4), a state in which the first roller rocker arm 8210 and the second roller rocker arms 8220, 8230 are being disconnected from each other is achieved when the shift member 910 is located at the extremity Pmax1, as with the above-described first changing mechanism 81. In this state, the intake valves 3 are in the valve inactive state.

In connection with the above, the shapes and dimensions of the end faces of the first pin 281 and the second pins 282, 283 should be determined in the same manner as in the above-described first switching mechanism.

When the shift member 910 is located at the extremity Pmax2, a state in which the second roller rocker arm 8220 and the first roller rocker arm 8210 are connected by the second pin 282, and the first roller rocker arm 8210 and the second roller rocker arm 8230 are connected by the first pin 281 is achieved. In other words, when the shift member 910 is located at the extremity Pmax2, a state in which the first roller rocker arm 8210 and the second roller rocker arms 8220, 8230 are being connected with each other is achieved. In this case, the intake valves 3 are operated to open/close in accordance with the cam profile of the main cam 70.

Therefore, the active state and the inactive state of the intake valves 3 can be switched by shifting the pins 281, 282, and 283 in the axial direction by the first actuator 91. The pins 281, 282, and 283 in this process correspond to the switching pins according to the present invention.

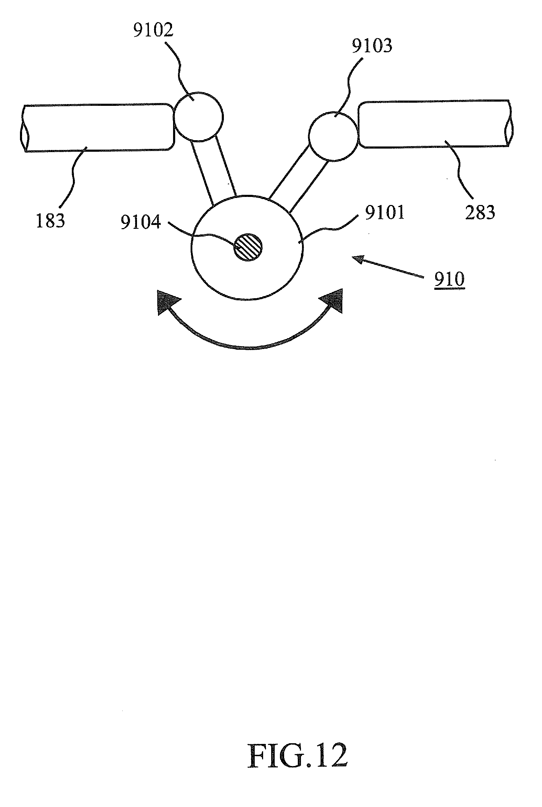

Now, the specific construction of the first actuator 91 will be described. Fig. 12 is a plan view showing the structure of the shift member 910.

In Fig. 12, the shift member 910 includes a rotary member 9101 rotatably supported on the cylinder head and two arms 9102, 9103 that extend in radial directions from the outer periphery of the rotary member 9101.

The tip end of one arm 9102 among the two arms 9102, 9103 is in contact with the tip end of the second pin 183 in the above-described first changing mechanism 81. The other arm 9103 among the two arms 9102, 9103 is in contact with the tip end of the second pin 283 in the above-described second changing mechanism 82.

With the above structure of the shift member 910, as the rotary member 9101 rotates, the tip end of the two arms 9102, 9103 can shift or displace the second pins 183, 283 in the axial direction.

In this case, the drive unit 911 may rotate the shaft 9104 of the rotary member 9101. The drive unit 911 as such may be, for example, an electric motor.

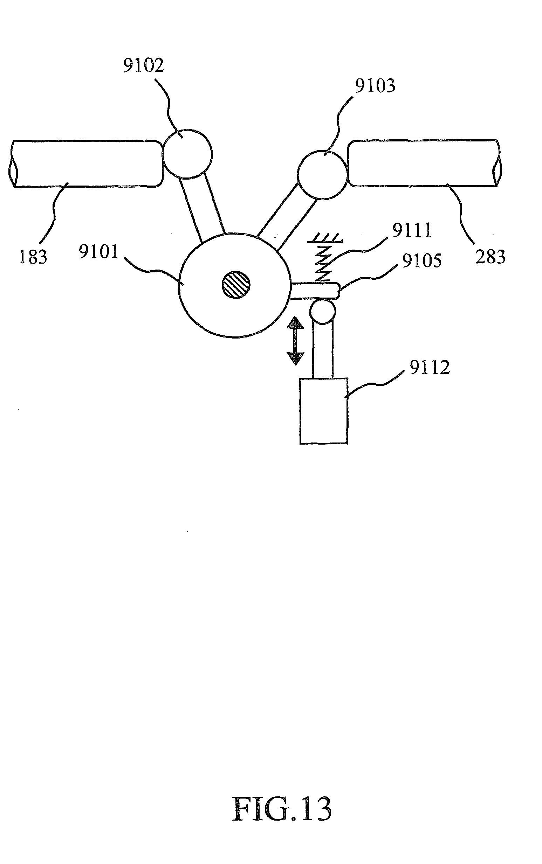

Another embodiment of the drive unit 911 may be, as shown in Fig. 13, a spring 9111 that biases a drive arm 9105 provided on the rotary member 9101 in a rotational direction and a solenoid 9112 that presses the drive arm 9105 in the direction opposite to the direction of biasing by the spring 9106.

The spring 9111 can be eliminated by making the biasing force of the return spring 18 in the above-described first switching mechanism larger than that of the return spring 28 in the second switching mechanism.

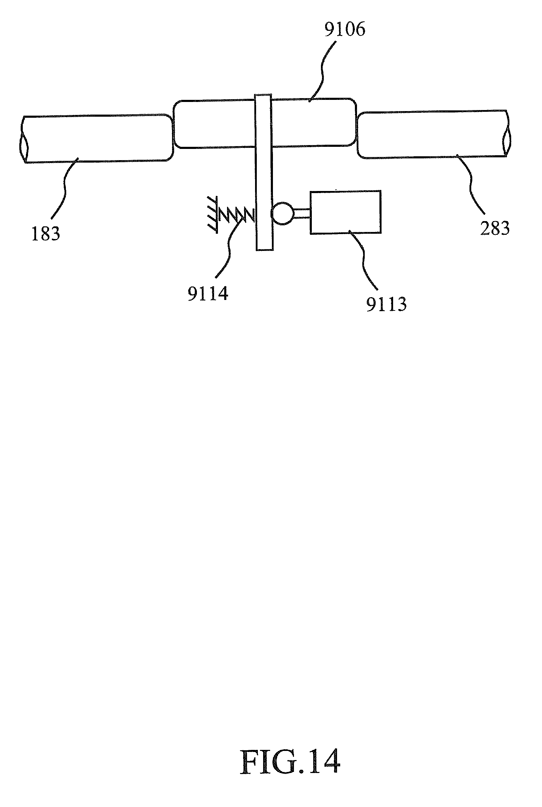

Another embodiment of the shift member 910 may be, as shown in Fig. 14, a cylindrical member 9106 that is supported between the second pin 183 in the first changing mechanism 81 and the second pin 283 in the second changing mechanism 82 in such a way as to be able to move forward and backward along the axial direction.

With the above shift member 910 (9106), a sliding resistance does not exist between the shift member 910 (9106) and the second pins 183, 283 as the shift member 910 (9106) shifts; therefore, the required power of the drive unit 911 can further be reduced.

It is preferred that the central axis of the cylindrical member 9106 and the central axis of the second pins 183, 283 be offset in view of a displacement that may caused when the second roller rocker arms 8130, 8230 swing. The reason why this is preferred is that the outer diameter of the cylindrical member 9106 need not be too large, and the sliding resistance between the cylindrical member 9106 and the second pins 183, 283 during the swinging operation of the changing mechanism 81, 82 can be made low.

An exemplary drive unit 911 that is suitable for use with the shift member 910 shown in Fig. 14 may be a spring 9114 that biases the cylindrical member 9106 toward the second changing mechanism 82 and a solenoid 9113 that presses the cylindrical member 9106 toward the first changing mechanism 81. The spring 9114 in this case can also be eliminated by making the biasing force of the return spring 18 in the above-described first switching mechanism larger than that of the return spring 28 in the second switching mechanism.

Another embodiment of the drive unit 911 may be an electric motor that is linked with the cylindrical member 9106 by a rack mechanism.

In the first changing group described above, the two changing mechanism 81, 82 can be driven by one actuator 91. In the driving, since it is sufficient for the first actuator 91 to displace the switching pins only by a small distance, the valve operation characteristics of the intake valves 3 of the two cylinders 21, 22 can be switched promptly. Furthermore, since the masses of the switching pins are small, the first actuator 91 can displace the switching pins by a low power.

It is concerned that the biasing force of one of the return springs 18, 28 might act as a resistance against the displacement of the switching pins. However, since the biasing force of the other of the return springs 18, 28 will act as an assistance, the required power of the first actuator 91 can be made small.

Therefore, according to the first changing group described above, it is possible to improve the response in changing the valve operation characteristics while making the rating of the first actuator 91 low. Furthermore, since one actuator is used in common by two changing mechanism, a simplification of the construction of the first changing group can be achieved. In consequence, a preferable reduction in the size and weight of the first changing group can be achieved.

In the second changing group also, advantages the same as the first changing group can be achieved by adopting the construction the same as the first changing group. In consequence, a preferable reduction in the size and weight of the entire valve train system can be achieved.

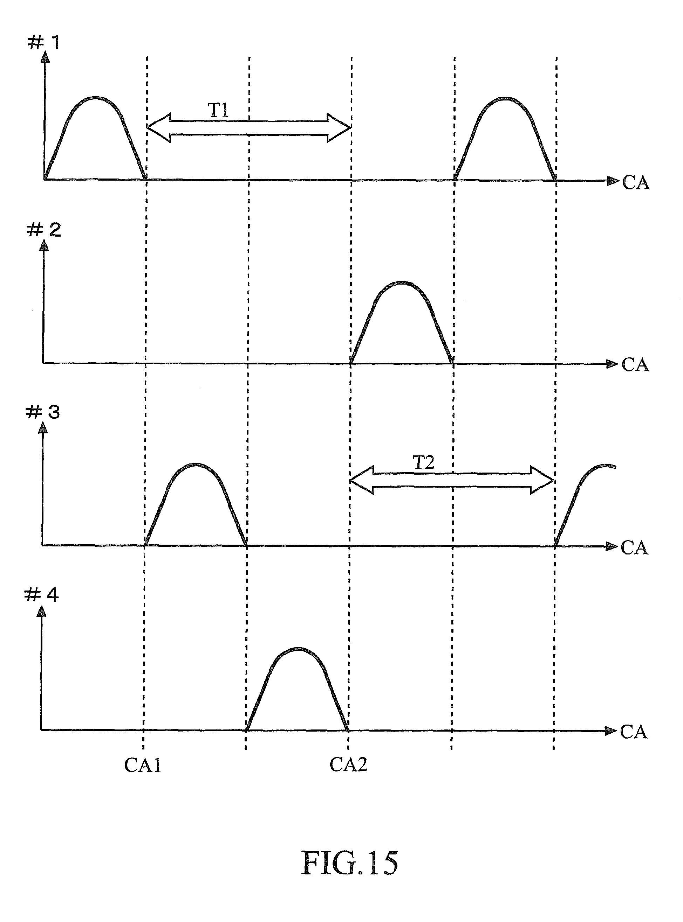

Next, a method of controlling the first actuator 91 and the second actuator 92 by the ECU 100 will be described with reference to Fig. 15.

It is necessary that the above-described displacement of the switching pins be performed at a time when the central axis of the first pin and the central axes of the second pins are aligned on the same line. In other words, it is necessary that the displacement be performed at a time when the first roller rocker arm is not swung at all.

For example, the ECU 100 controls the first actuator 91 in such a way that the switching pins are displaced during the base circle period of the main cams 70 for the number one cylinder (#1) 21 and the number two cylinder (#2) 22 (i.e. during the period in which the base circle portions of the main cams 70 are in contact with the first rollers 8111, 8211).

In this process, it is preferred that the ECU 100 control the first actuator 91 in such a way that the switching pins start to displace at the time of the beginning of the base circle period T1 or at a time immediately after the beginning thereof.

Specifically, the ECU 100 may cause the first actuator 91 to operate at the time when the output signal of the crank position sensor 101 indicates the crank angle CA1 corresponding to the beginning of the base circle period T1. The crank angle CAI can be determined in advance by an experiment.

Similarly, the ECU 100 may cause the second actuator 92 to operate at the time of beginning CA2 of the base circle period T2 of the main cams 70 for the number three cylinder (#3) 23 and the number four cylinder (#4) 24.

With the above control of the first actuator 91 and the second actuator 92 by the ECU 100, the displacement of the switching pins can be completed during the base circle periods T1, T2.

The above-described control may preferably be performed, for example, at a time when a fuel cut operation of the internal combustion engine 1 is started, or at a time when the fuel cut operation of the internal combustion engine 1 is ended.

If the intake valves 3 operate to open/close during the fuel cut operation of the internal combustion engine 1, fresh air will pass through the cylinders and an exhaust gas purification apparatus provided in the exhaust system of the internal combustion engine 1. In consequence, there is a possibility that a noble metal catalyst supported on the exhaust gas purification apparatus is oxidized, and the purifying capability of the exhaust gas purification apparatus is deteriorated or lowered.

In the case of internal combustion engines equipped with an EGR system for recirculating a portion of the exhaust gas into the cylinders, the EGR gas in the intake system will be scavenged during the fuel cut operation, and there is a possibility that shortage of the EGR gas occurs immediately after the termination of the fuel cut operation.

If the switching pins are displaced to disconnect the first roller rocker arm and the second roller rocker arms for each cylinder at the time when the fuel cut operation of the internal combustion engine 1 is started, the intake valves 3 are brought into an inactive state immediately; therefore, the above-described malfunctioning can be prevented from occurring.

### (Embodiment 2)

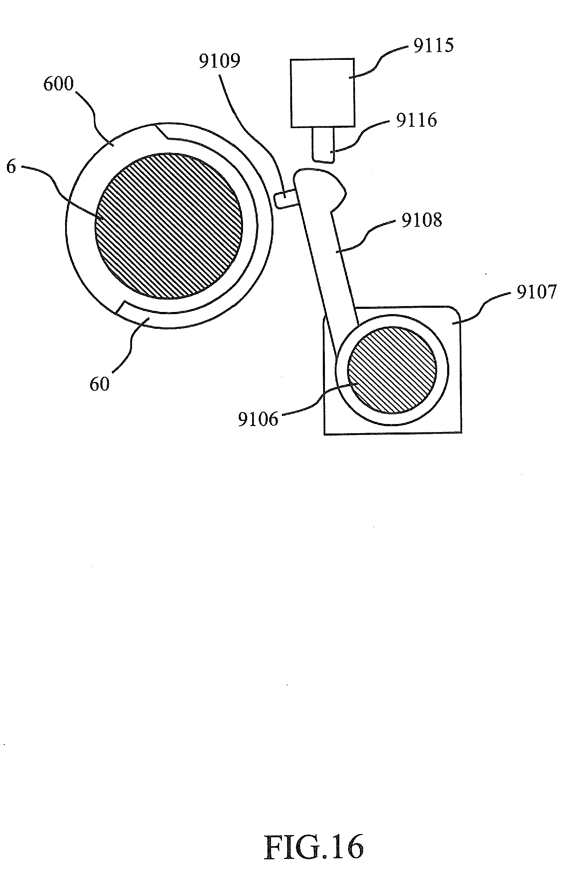

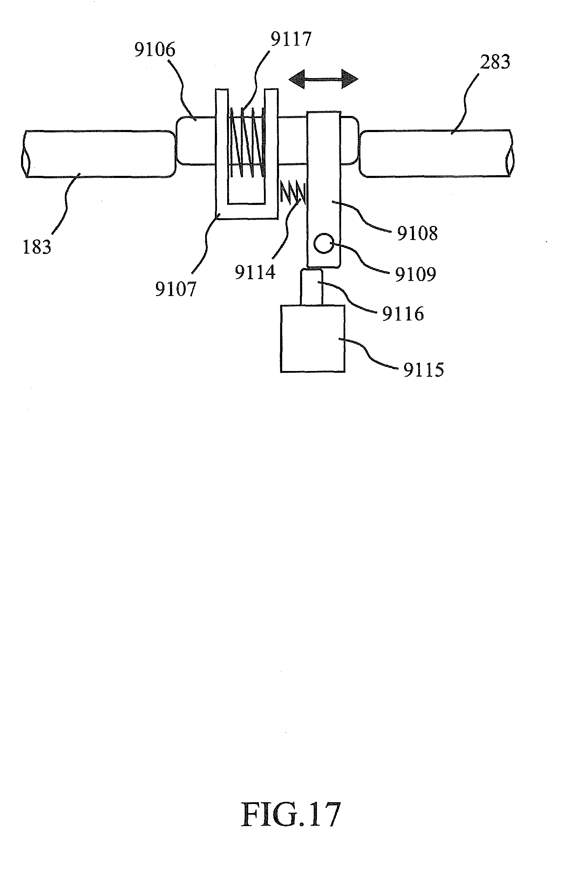

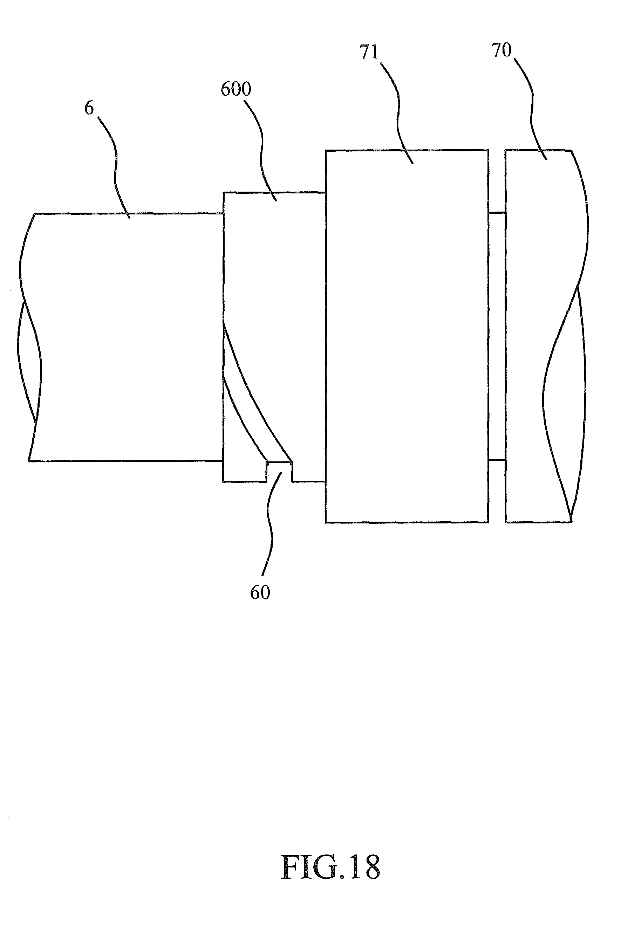

Next, a second embodiment of the present invention will be described with reference to Figs. 16 to 22. Only the features that are different from the above-described first embodiment will be described here, and descriptions of like features will not be made.

What characterizes the valve train system according to this embodiment is the construction of actuators 91, 92. Specifically, the actuators 91, 92 in this embodiment are **characterized in that** the switching pins are displaced utilizing the rotational force of the intake cam shaft 6.

Firstly, the construction of the actuators 91, 92 in this embodiment will be described with reference to Figs. 16 to 19. Since the first actuator 91 and the second actuator 92 have the same construction, only the construction of the first actuator will be described here.

A shift member 910 of the first actuator 91 comprises a cylindrical member 9106 disposed between the second pin 183 in the first changing mechanism 81 and the second pin 283 in the second changing mechanism 82. This cylindrical member 9106 corresponds to the shaft member according to the present invention and is supported by a carrier 9107 fixed on the cylinder head in such a way that it can move forward and backward along the axial direction and rotate in the circumferential direction.

An arm 9108 is provided on and extending from the outer circumferential surface of the cylindrical member 9106. This arm 9108 corresponds to the pivoting member according to the present invention. The tip end portion of the arm 9108 is located at a position opposed to the circumferential surface of the intake cam shaft 6. An insert pin 9109 is provided on the tip end portion of the arm 9108.

A large diameter portion 600 having an outer diameter larger than the diameter of the intake cam shaft 6 is provided on the outer circumferential surface of the intake cam shaft 6 that is opposed to the insert pin 9109. The circumferential surface of the large diameter portion 600 has a helical groove 60 that extends in the circumferential direction. The width of the helical groove 60 is a little larger than the outer diameter of the insert pin 9109.

The base end position of the helical groove 60 with respect to the axial direction of the intake cam shaft 6 is determined in such a way as to coincide with the position of the insert pin 9109 when the shift member 910 is located at the extremity Pmax1 mentioned before. The base end position (rotational angular position) of the helical groove 60 with respect to the circumferential direction (rotational direction) of the intake cam shaft 6 is set to the rotational angular position at the time when the base circle period T1 begins.

On the other hand, the dead end position of the helical groove 60 with respect to the axial direction of the intake cam shaft 6 is determined in such a way as to coincide with the position of the insert pin 9109 when the shift member 910 is located at the extremity Pmax2 mentioned before. The dead end position of the helical groove 60 with respect to the circumferential direction of the intake cam shaft 6 is set to a position in front of the rotational angular position at the time when the base circle period T1 ends.

The drive unit 911 of the first actuator 91 comprises a solenoid 9115 for inserting the insert pin 9109 into the helical groove 60, a removing spring 9117 for removing the insert pin 9109 out of the helical groove 60, and a spring 9114 that biases the cylindrical member 9106 toward the second changing mechanism 82 (i.e. toward the extremity Pmax1).

The solenoid 9115 is disposed at a position that allows the drive shaft 9116 of the solenoid 9115 to press the back side (or the side opposite to the side on which the insert pin 9109 is provided) of the tip end portion of the arm 9108 toward the large diameter portion 600.

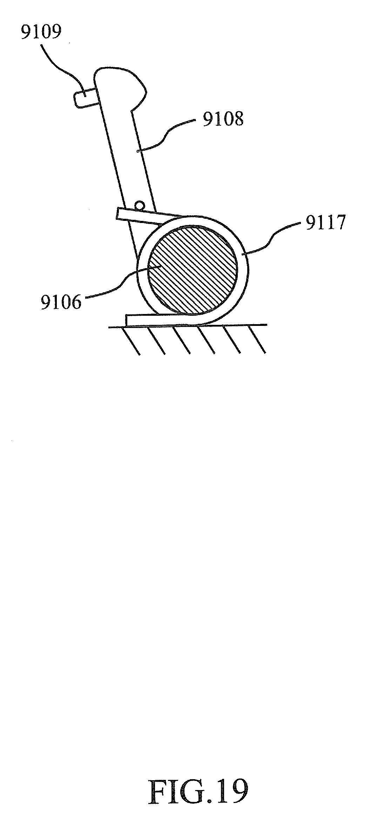

The removing spring 9117 is disposed at a position that allows it to biases the cylindrical member 9106 in such a direction that the tip end portion of the arm 9108 is moved away from the large diameter portion 600. In this embodiment, the removing spring 9117 is provided around the cylindrical member 9106, as shown in Fig. 19. One end of the removing spring 9117 is fixedly attached to the arm 9108, and the other end is fixedly attached to the cylinder head or the carrier 9107.

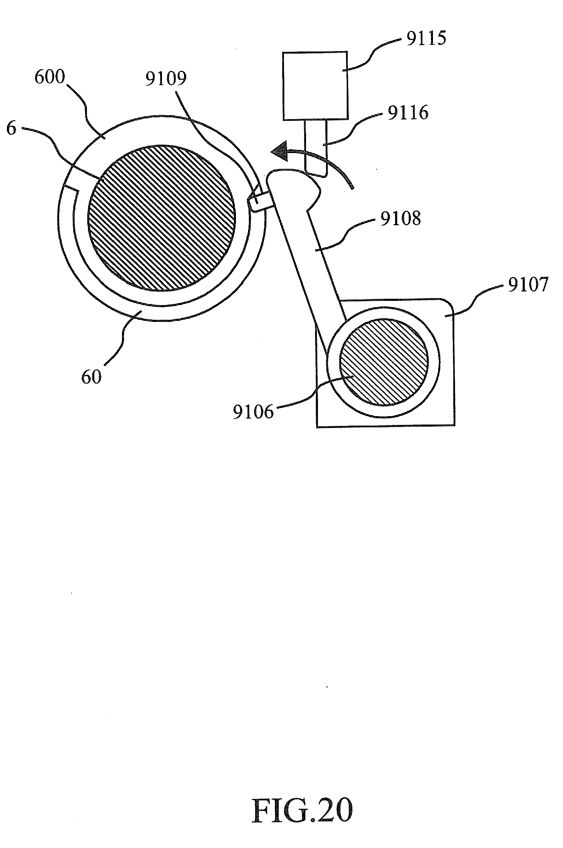

Next, the operation of the first actuator 91 will be described with reference to Figs. 20 to 22.

Firstly, when the solenoid 9115 is not operating, a state in which the insert pin 9109 is being apart from the helical groove 60 (e.g. the state shown in Fig. 16) is achieved by the biasing force of the removing spring 9117. In this state, the cylindrical member 9106 and the arm 9108 are positioned at the extremity Pmax1 by the biasing force of the spring 9114.

When the ECU 100 causes the solenoid 9115 to operate, the drive shaft 9116 of the solenoid 9115 presses the tip end portion of the arm 9108 toward the large diameter portion 600. At that time, the position of the base end of the helical groove 60 and the position of the insert pin 9109 with respect to the axial direction of the intake cam shaft 6 coincide with each other. At the time when the position of the helical groove 60 and the position of the insert pin 9109 with respect to the rotational direction of the intake cam shaft 6 coincide with each other (i.e. at the time when the rotational angle of the crankshaft coincides with the position CA1 of the beginning of the base circle period T1), the insert pin 9109 is inserted into the helical groove 60 (see Fig. 20).

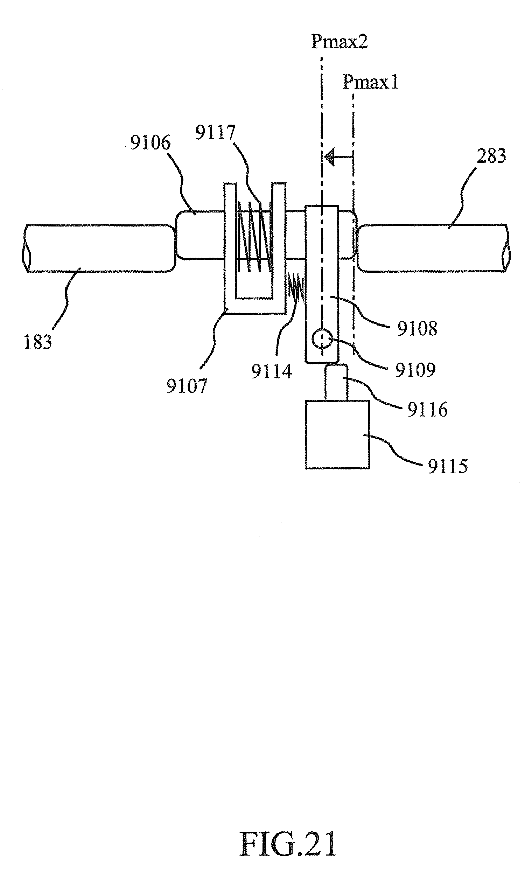

After the insertion of the insert pin 9109 in the helical groove 60, the position of the insert pin 9109 with respect to the axial direction of the intake cam shaft 6 changes along the helical groove 60. With this change, the position of the cylindrical member 9106 with respect to the axial direction changes from the extremity Pmax1 toward the extremity Pmax2. When the insert pin 9109 reaches the terminal end of the helical groove 60, the cylindrical member 9106 reaches the extremity Pmax2 (see Fig. 21).

After the insert pin 9109 has reached the terminal end of the helical groove 60, there is a possibility that the cylindrical member 9106 is returned from the extremity Pmax2 to the extremity Pmax1 by the biasing force of the spring 9114.

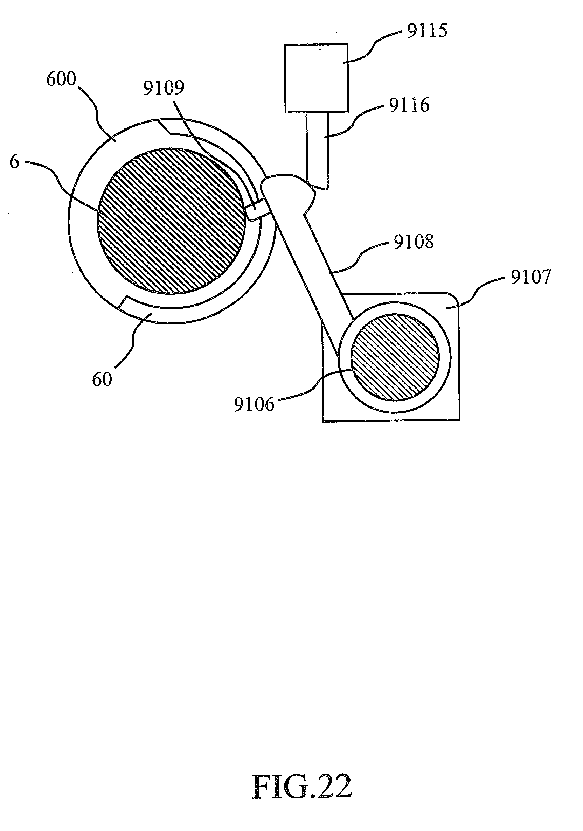

In view of this, the insert pin 9109 may be adapted to drop down from the large diameter portion 600 to the circumferential surface of the intake cam shaft 6 as shown in Fig. 22, when the insert pin 9109 reaches the terminal end of the helical groove 60. If this is the case, the side face of the insert pin 9109 abuts the step between the circumferential surface of the intake cam shaft 6 and the circumferential surface of the large diameter portion 600, whereby the position of the cylindrical member 9106 is maintained at the extremity Pmax2.

To shift cylindrical member 9106 from the extremity Pmax2 to the extremity Pmax1, the solenoid 9115 may move the drive shaft 9116 backward, or supply of drive current to the solenoid 9115 may be simply stopped. Then, the biasing force of the removing spring 9117 causes the insert pin 9109 to be disengaged from the step; consequently, the cylindrical member 9106 is shifted from the extremity Pmax2 to the extremity Pmax1 by the biasing force of the spring 9114.

Since it is sufficient for the first actuator 91 described above to generate a power only enough to press the insert pin 9109, the rating of the first actuator 91 can be made smaller. Furthermore, since the timing of shift of the shift member 910 is determined uniquely by the arrangement of the helical groove 60, it is not necessary for the ECU 100 to control the timing of shift. In consequence, reduction in the size and weight of the first actuator 91 can be achieved, and simplification of the control logic can be achieved.

The spring 9114 can be eliminated by making the biasing force of the return spring 18 larger than that of the return spring 28. If this is the case, a further simplification of the construction of the first actuator 91 can be achieved.

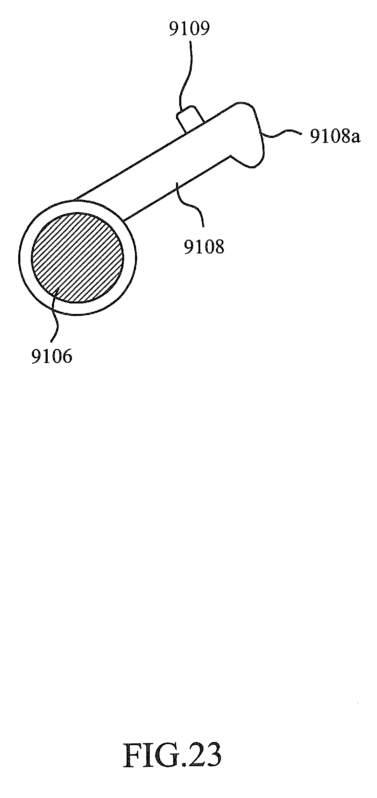

The position of the insert pin 9109 on the arm 9108 may be offset from the tip end portion of the arm 9108 toward the base end portion, as shown in Fig. 23. In other words, the position of the insert pin 9109 with respect to the axial direction of the arm 9108 may be arranged between the portion 9108a that is in contact with the drive shaft 9116 (power point) and the portion connected with the cylindrical member 9106 (fulcrum) .

With this arrangement, the degree of freedom in arranging the solenoid 9115 is increased. Consequently, the solenoid 9115 can be disposed outside the cam carrier 12 without an unwanted increase in the length of the drive shaft 9116.

With the above-described arrangement, the reactive force exerted on the arm 9108 by the helical groove 60 via the insert pin 9109 can be received by two portions, namely the portion 9108a that is in contact with the drive shaft 9116 and the portion connected with the cylindrical member 9106. Therefore, a deformation of the arm 9108 can be made small.

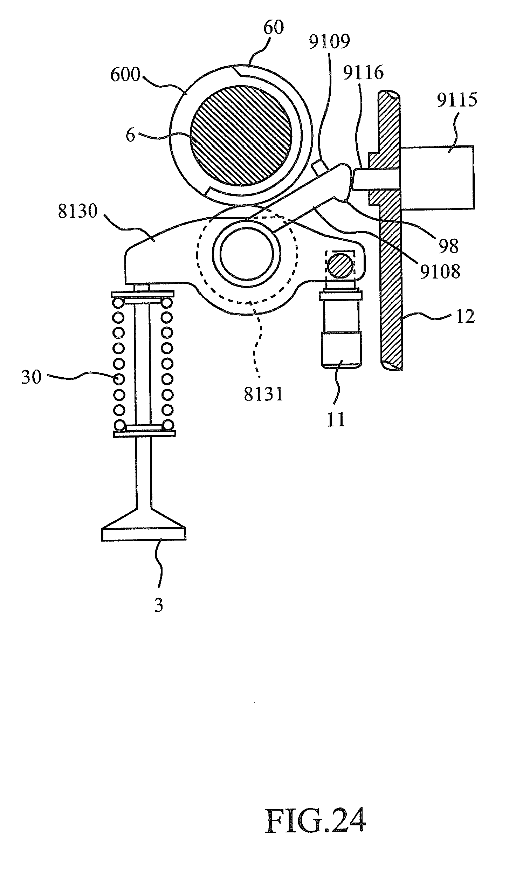

In cases where the arm 9108 is disposed beneath the intake cam shaft 6 as shown in Fig. 24, a volume portion 98 may be provided on the side (lower side) of the arm 9108 opposite to the side (upper side) on which the insert pin 9109 is provided. If the volume portion 98 like this is provided on the arm 9108, the weight of the volume portion 98 is added to the biasing force of the removing spring 9117 when the insert pin 9109 is removed out of the helical groove 60. In consequence, it is possible to remove the insert pin 9109 out of the helical groove 60 quickly.

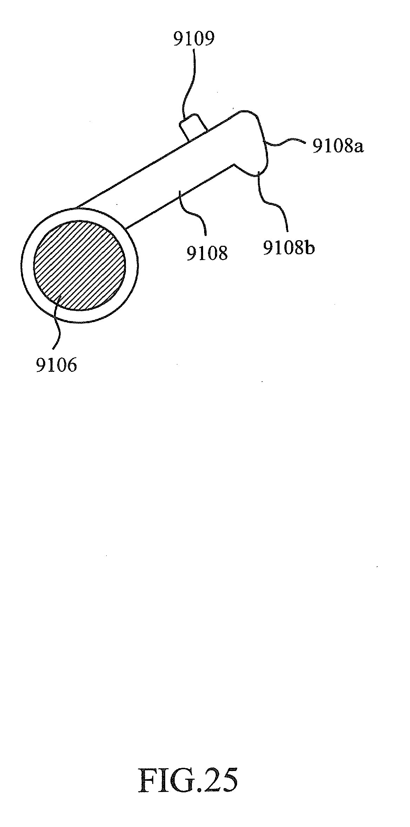

As a more preferable arrangement of the volume portion, it is preferred that the volume portion be provided at a position 9108b in the vicinity of the tip end of the arm 9108 and adjacent to the portion that is in contact with the drive shaft 9116, as shown in Fig. 25. With this arrangement, the above described advantageous effect is achieved more remarkably, and the area of the portion with which the drive shaft 9116 can be in contact with is increased. With the increase in the area with which the drive shaft 9116 can be in contact with, the solenoid 9115 can cause the arm 9108 to swing with improved reliability, even if an age deterioration occurs, or an assembly error and/or initial tolerance exist.

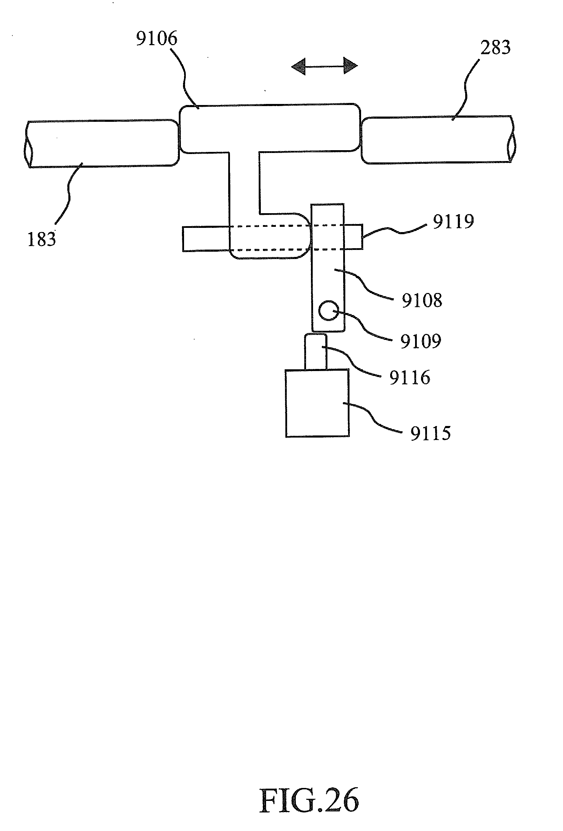

Although a construction in which the cylindrical member 9106 is also serves as a rotation shaft for the arm 9108 has been described in this embodiment, the arm 9108 may be adapted to be supported by a rotation shaft 9119 that is independent from the cylindrical member 9106, as shown in Fig. 26. This is advantageous in that a high degree of freedom in the movable range of the arm 9108 and in the mount angle of the solenoid 9115 is achieved.

Although internal combustion engines 1 in which the four cylinders are arranged in series have been discussed by way of example in the above-described embodiments 1 and 2, this is not intended to limit the number and the arrangement of the cylinders of internal combustion engines to which the present invention can be applied.

The number of the intake valves or the exhaust valves per cylinder is not limited to two; the present invention can be applied to any internal combustion engine provided with at least one intake valve or exhaust valve per cylinder.

Furthermore, cases in which two cylinders are driven by one actuator have been discussed in the above-described embodiments 1 and 2, three or more cylinders can be driven by one actuator as long as the base circle periods of the cylinders overlap.

### DESCRIPTION OF THE REFERENCE SIGNS

- 1:: internal combustion engine
- 3:: intake valve
- 4:: exhaust valve
- 5:: ignition plug
- 6:: intake cam shaft
- 10:: rocker shaft
- 11:: lash adjuster
- 18:: return spring
- 21:: number one cylinder
- 22:: number two cylinder
- 23:: number three cylinder
- 24:: number four cylinder
- 28:: return spring
- 30:: valve spring
- 60:: helical groove
- 70:: main cam
- 71:: sub cam
- 81:: first changing mechanism
- 82:: second changing mechanism
- 83:: third changing mechanism
- 84:: fourth changing mechanism
- 91:: first actuator
- 92:: second actuator
- 98:: volume portion
- 181:: first pin
- 182:: second pin
- 183:: second pin
- 281:: first pin
- 282:: second pin
- 283:: second pin
- 600:: large diameter portion
- 910:: shift member
- 911:: drive unit
- 8110:: first roller rocker arm
- 8113:: first support shaft
- 8114:: first pin bore
- 8120:: second roller rocker arm
- 8122:: second support shaft
- 8123:: second pin bore
- 8130:: second roller rocker arm
- 8132:: second support shaft
- 8133:: second pin bore
- 8210:: first roller rocker arm
- 8213:: first support shaft
- 8214:: first pin bore
- 8220:: second roller rocker arm
- 8222:: second support shaft
- 8223:: second pin gore
- 8230:: second roller rocker arm
- 8232:: second support shaft
- 8233:: second pin bore
- 9109:: insert pin
- 9115:: solenoid
- 9116:: drive shaft
- 9117:: removing spring

## Claims

1. A valve train system of an internal combustion engine that can change valve operation characteristics of an intake valve and/or an exhaust valve provided on an internal combustion engine, **characterized by** comprising:
a plurality of changing mechanisms that change valve operation characteristics by connecting/disconnecting a plurality of power transmission members provided between a cam and a valve to/from each other;
a switching pin that is provided in each changing mechanism in such a way as to be able to move forward and backward to provide switching between connection and disconnection of the plurality of power transmission members;
an actuator that generates power for moving the switching pin forward and backward; and
a distribution mechanism that distributes the power generated by one actuator to a plurality of switching pins.

2. A valve train system of an internal combustion engine according to claim 1, **characterized in that** the plurality of power transmission members include a first swing member that is caused to swing by a cam and a second swing member that swings with the operation of the valve, and said switching pin is supported by one of said first swing member and said second swing member in such a way as to be able to move forward and backward and inserted/retracted into/out of an engagement bore provided in the other of said first swing member and said second swig member.

3. A valve train system of an internal combustion engine according to claim 2, **characterized in that** said distribution mechanism comprises a shift member that can shift with the forward and backward motion of the plurality of switching pins, and said actuator comprises a biasing member that biases said shift member in the direction of forward motion of said switching pins and a drive unit that causes said shift member to shift in the direction of backward motion of said switching pins.

4. A valve train system of an internal combustion engine according to claim 3, **characterized in that** said drive unit causes said shift member to shift utilizing a torque of a cam.

5. A valve train system of an internal combustion engine according to claim 4, **characterized by** further comprising a helical groove provided on an outer circumferential surface of a rotary member that rotates with the cam, and an insert pin that is attached on said shift member and can be inserted/removed into/out of said helical groove, wherein said drive unit inserts/removes said insert pin into/out of said helical groove.

6. A valve train system of an internal combustion engine according to claim 5, **characterized in that** said shift member comprises a shaft member that is in contact with said switching pins, can move forward and backward in the same direction as the switching pins, and can rotate in a circumferential direction and a pivoting member that is fixed to said shaft member and can pivot about the shaft member serving as a pivot, said insert pin is attached on said pivoting member, and said drive unit presses said pivoting member to thereby insert said insert pin into said helical groove.

7. A valve train system of an internal combustion engine according to claim 6, **characterized in that** said insert pin is provided between a portion of said pivoting member that is in contact with said drive unit and a portion of said pivoting member that is connected with said shaft member.

8. A valve train system of an internal combustion engine according to claim 6 or 7, **characterized in that** a volume portion is provided on a surface of said pivoting member that faces in a direction in which said insert pin is removed from the helical groove and in a direction in which the weight of the pivoting member acts.

9. A valve train system of an internal combustion engine according to any one of claims 5 or 8, **characterized by** further comprising a restraining mechanism that restrains a shift of said shift member in the forward direction when said shift member has shifted to reach its backside extremity.

10. A valve train system of an internal combustion engine according to any one of claims 2 or 9, **characterized by** further comprising a control means for controlling the actuator in such a way that the first swing member and the second swing member are disconnected at a time when a fuel cut operation of the internal combustion engine is started.

11. A valve train system of an internal combustion engine according to any one of claims 2 or 10, **characterized by** further comprising a sub cam that rotates while being in contact with said second swing member, wherein said sub cam has a cam profile different from that of said cam.
